# EUROPEAN PATENT SPECIFICATION

(11) **EP 3 072 757 B1**
(45) Date of publication and mention of the grant of the patent: **16.05.2018**
(21) Application number: 16161419.3
(22) Date of filing: 21.03.2016
(51) Int. Cl.: B60S 1/40

(54) **CONNECTOR ELEMENT FOR CONNECTING TOGETHER WINDSCREEN WIPER BLADES AND THEIR OPERATING ARMS**
VERBINDUNGSELEMENT ZUR VERBINDUNG VON SCHEIBENWISCHERBLÄTTERN MIT DEREN BETÄTIGUNGSARMEN
ÉLÉMENT DE RACCORD POUR RACCORDER ENSEMBLE DES LAMES D'ESSUIE-GLACE ET LEURS BRAS DE MANOEUVRE

(30) Priority: 24.03.2015 CN 201520168005 U
(43) Date of publication of application: 28.09.2016
(73) Proprietor: Cartix S.r.l., 20123 Milano (IT)
(72) Inventor: WU, Zhengzhu, 20123 Milano (IT)
(74) Representative: Raimondi, Margherita

(56) References cited:
- US-A1- 2008 222 830
- US-A1- 2011 047 742
- US-A1- 2014 317 875

## Description

The present invention relates to a connector element for connecting together windshield wiper blades and their operating arms.

It is known, in the technical sector relating to the production and distribution of windshield wipers for vehicles, the blades of which must be connected to associated operating arms which can be mounted on the vehicle, that said arms have ends formed with different shapes which result in the need for differently designed intermediate connectors with corresponding engaging elements, normally comprising a transverse pin, which is arranged between vertical partitions fixed to the blade and is designed to allow engagement/disengagement with/from the intermediate connector for mounting/replacement of said blade.

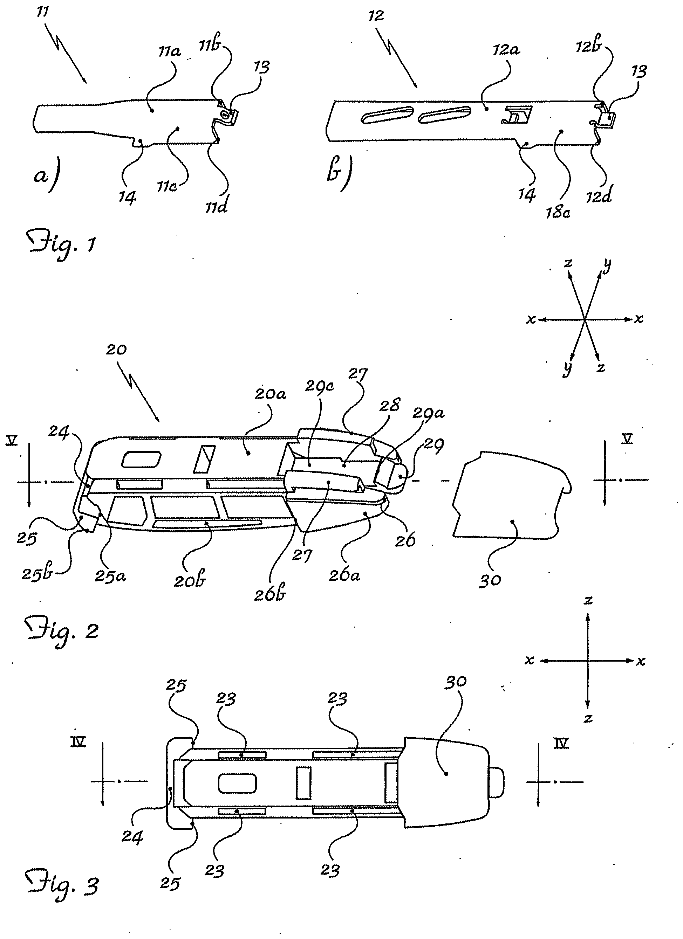

A particular example of this situation consists of the arms which have a free end for engagement with the blade formed in the manner of an "overturned U" directed towards the windshield; examples of these arms 11,12 are respectively and schematically shown in Figs. 1a, 1b with the sole free end part 11a, 12a having, extending therefrom in a longitudinal direction outwards, a shaped tongue 13 joined to the base 11b,12b of the overturned "U"; arms of this type also have a tooth 14 which extends in the vertical direction Z-Z from each side 11c,12c of the overturned "U".

Correspondingly, intermediate arm/blade connectors are also known, these however, although performing their function, having the drawback that they have a complicated structure and are not easy or straightforward to use for the end user. An example of a connector of this kind is shown in US-A-2014/0317875. The technical problem which is posed, therefore, is that of providing an intermediate connector element for connecting together the operating arms of windshield wiper blades of the type having an end in the form of an overturned "U" and said blades, which is able to provide a solution to the problems of the prior art.

In connection with this problem it is also required that this connector element should have small dimensions, be easy and inexpensive to produce and assemble and be able to fitted/removed with ease by any user, including non-specialized users.

These results are obtained according to the present invention by a connector element for connecting together windshield wiper blades and their operating arms formed in the manner of an overturned "U" directed towards the windshield in accordance with the characteristic features of Claim 1.

Further details may be obtained from the following description of a non-limiting example of embodiment of the subject of the present invention, provided with reference to the accompanying drawings, in which:
Figures 1a, 1b: show respectively a perspective view of the end part of a first arm and second arm according to the prior art for operating windshield wiper blades;
Figure 2: shows an exploded view of the connector element according to the present invention;
Figure 3: shows a top plan view of the connector element according to the present invention assembled and closed;
Figure 4: shows a cross-section along the plane indicated by IV-IV in Fig. 3;
Figure 5: shows side views of the sequence for assembling the connector element on the operating arm; and
Figure 6: shows a schematic cross-section along a vertical plane of the connector mounted on the operating arm.

As shown and assuming solely for the sake of convenience of description and without a limiting meaning a set of three reference axes, i.e. in a longitudinal direction X-X, corresponding to the lengthwise dimension of the connector element; transverse direction Y-Y, corresponding to the widthwise dimension of the connector element; and vertical direction Z-Z, perpendicular to the other directions and corresponding to the heightwise dimension, as well as a distal front part, far from the operating arm, and a proximal rear part, close to the operating arm, the connector element according to the invention comprises essentially:
- a body 20, which is preferably internally hollow, having:
   - a substantially parallelepiped shape with a height in the vertical direction Z-Z much smaller than the length in the longitudinal direction X-X; upper base 20a and vertical sides 20b;
   - preferably the body 20 has, formed internally, two pairs of respectively front and rear, fixed, lining sides 21 arranged adjacent in the longitudinal direction X-X, parallel to the sides 20b of the body 20 from which they are spaced by a suitable amount in the transverse direction Y-Y and respectively connected in the central position to a slot 22 which is open in the vertical direction Z-Z on the opposite side to the base 20a; interspaces 23 are thus formed, these being designed to receive corresponding flanges of the windshield wiper blade provided with a transverse pin (details not shown) for engagement with the slot 22 of the connector element.

In its rear part (Fig. 3) the body 20 has:
- a flange 24 extending in the transverse direction Y-Y, the opposite ends of which project in the transverse direction Y-Y beyond the sides 20b,20c and are formed as a respective relief 25 directed in the longitudinal direction X-X; preferably the end surfaces (directed towards the front of the body 20) of these reliefs 25 have a first section 25a extending substantially vertically and a second section 25b adjacent to the first section and extending - according to the layout shown in Fig. 3
   - inclined from the top downwards and from the inside outwards;
- a distal front part formed as a nose 26 tapered from the upper base 20a towards the bottom front end edge; a guide 27, with a curvilinear extension tapered parallel to the surface of the said nose, is formed on the top part and on each side of the nose 26; preferably each side 26a of the nose 26 has a vertical stop surface 26b extending outwards in the transverse direction Y-Y;
- a front tongue 28, which extends longitudinally between the two sides 20b and the proximal end of which inside the body 20 is fixed thereto, while the opposite distal end is free and projects partially in the longitudinal direction X-X from the front transverse edge of the connector; the tongue 28 has a suitable elasticity for allowing the elastic deformation thereof along the longitudinal direction X-X.

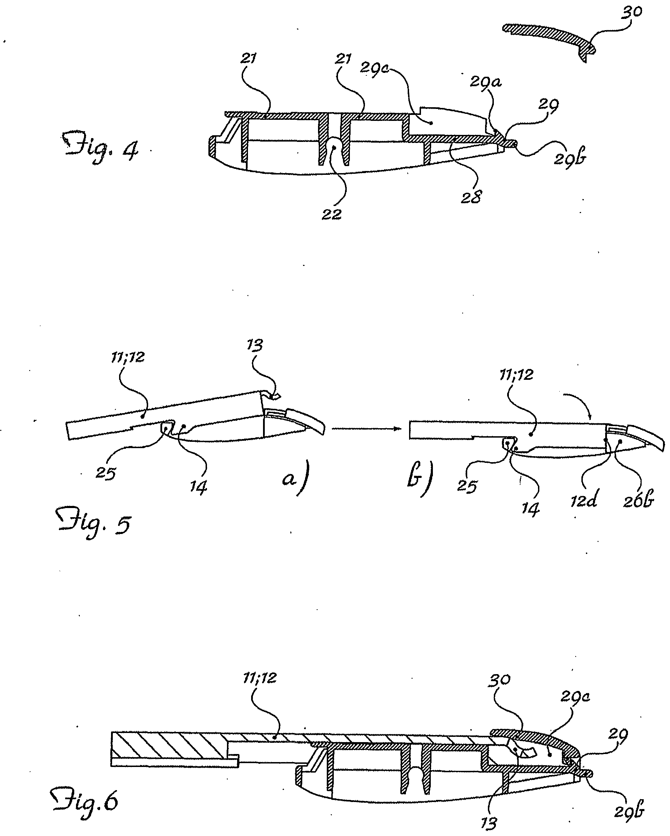

Preferably, the free end of the tongue 28 has a tooth 29 with vertical edge 29a directed towards the inside of the body 20; preferably the outer surface 29b of the tooth is inclined from the top towards the bottom and from the inside towards the outside of the body 20;
- a space 29c, open upwards, formed in the nose 26 and bounded by the sides 26a of the nose 26 and the tongue 28 inside the two said sides;
   - a cover 30 which has
- a form and dimensions complementing those of the nose 26 of the body 20, having vertical sides 30 with a free end, folded in the manner of a "C" inwards in the transverse direction Y-Y, so as to form sliding elements 31 suitable for sliding on the guides 27 of the nose 26 of the body 20;
- a front part 32 with a seat 33 bounded by a vertical partition 33a suitable for engagement with the said tooth 29 of the tongue 28, if present. With this configuration operation of the connector according to the invention is as follows (Figs. 5 and 6):
   - starting from a condition where the cover 30 is slid forwards in the longitudinal direction X-X so as to open the nose 26 of the body 20 and allow access to the space 29c which is open upwards,
   - the arm 11,12 is inclined and mounted on the connector in an initial position (Fig. 5a) with the teeth 14 resting on the reliefs 25 of the rear flange 24 of the body 20;
   - the arm 11,12 is rotated in a clockwise direction
   - or vice versa the connector rotated in an anticlockwise direction - until the front end 11b;12b of the arm enters completely inside the space 29c;
   - the cover 30 is slid along the guides 27 towards the proximal part of the body 20 until the space 29c is completely closed;
   - in this closed condition the arm 11,12 is retained:
      -- in the longitudinal direction X-X
- by the reliefs 25 which prevent it from coming out at the rear, and
- by the vertical transverse reliefs 26b of the nose 26 which prevent it from moving towards the front distal part;
   -- in the vertical direction Z-Z
- by the cover 30 closed and locked by the tooth 29 engaged with the partition 33a of the nose 26.
- by the rear reliefs 25 with which the rear teeth 14 of the arm 11,12 are engaged.

It is therefore clear how the connector element according to the invention is simple and inexpensive to produce and assemble and able to make the operation of inserting/extracting the connector element into/from the operating arm particularly easy and straightforward, while ensuring a stable and reliable relative connection. Although described in connection with a number of embodiments and a number of preferred examples of embodiment of the invention, it is understood that the scope of protection of the present patent is defined solely by the claims below.

## Claims

1. Connector element for connecting together windshield wiper blades and their operating arms (11,11a;12,12a), said arms being formed in the manner of an overturned U directed towards the windshield with its free end (11a,12a) from which a shaped tongue (13) extends outwards in a longitudinal direction (X-X) comprising:
- a body (20) which has
. a substantially parallelepiped shape with upper base (20a) and outer vertical sides (20b);
. a rear flange (24) which extends in the transverse direction (Y-Y) and the opposite ends of which project in the transverse direction (Y-Y) beyond the sides (20b,20c) and are formed as respective reliefs (25) oriented in the longitudinal direction (X-X);
. a distal front part formed in the manner of a nose (26) tapered from the upper base (20a) towards a bottom front end edge; a respective guide (27) with a curvilinear extension tapered parallel to the upper surface of the nose being formed on the upper part of said nose along each side;
. a front tongue (28) which extends longitudinally between the two sides (20b) and the proximal end of which inside the body (20) is fixed thereto, while the opposite distal end is free, the tongue (28) having a suitable elasticity for allowing the elastic deformation thereof along the vertical direction (Z-Z); the free end of the tongue (28) having a tooth (29) with vertical edge (29a) directed towards the inside of the body (20);
. a space (29c), open upwards, formed in the nose (26) and bounded by the sides (20a) of the body (20) and by the tongue (28) inside the two said sides;
- a cover (30) which has
• a form and dimensions complementing those of the nose (26) of the body (20), vertical sides (30a) with a free end folded in the manner of a "C" inwards in the transverse direction (Y-Y), so as to form sliding elements (31) suitable for sliding on the guides (27) of the nose (26) of the body (20);
• a front part (32) with a recessed seat (33) bounded by a vertical partition (33a) suitable for engagement with the said tooth (29) of the tongue (28) .

2. Connector element according to Claim 1, **characterized in that** the parallelepiped shape of the body (20) has a height in the vertical direction (Z-Z) much smaller than the length in the longitudinal direction (X-X).

3. Connector element according to Claim 1 or 2, **characterized in that** the body (20) has two pairs of respectively front and rear, fixed, inner lining sides (21) which are arranged adjacent in the longitudinal direction (X-X), parallel to the sides (20b) of the body (20) from which they are spaced by a suitable amount in a transverse direction (Y-Y) and respectively connected in the central position to a slot (22) open in the vertical direction (Z-Z) on the opposite side to the base (20a) .

4. Connector element according to any one of the preceding claims, **characterized in that** the front surfaces of said reliefs (25) have a first section (25a) extending substantially vertically and a second section (25b), adjacent to the first section, inclined from the base (20a) towards the respective free edge and from the inside towards the outside in the longitudinal direction (X-X).

5. Connector element according to any one of the preceding claims, **characterized in that** each side (26a) of the nose (26) has a vertical stop surface (26b) extending in the transverse direction (Y-Y) towards the outside of the body (20).

6. Connector element according to any one of the preceding claims, **characterized in that** the outer surface (29b) of the tooth (29) is inclined from the top towards the bottom and from the inside towards the outside of the body (20).

## Patentansprüche

1. Verbindungselement zum miteinander Verbinden von Windschutzscheiben-wischerblättern und ihren Betätigungsarmen (11, 11a; 12, 12a), wobei die Arme in der Art eines umgedrehten U ausgebildet sind, das mit seinem freien Ende (11a, 12a) auf die Windschutzscheibe ausgerichtet ist, von denen sich eine geformte Zunge (13) in einer Längsrichtung (X-X) nach außen erstreckt, umfassend:
- einen Körper (20), der das Folgende aufweist:
• eine im Wesentlichen parallelepipede Form mit einer oberen Basis (20a) und äußeren vertikalen Seiten (20b);
• einen hinteren Flansch (24), der sich in der Querrichtung (Y-Y) erstreckt und dessen entgegengesetzte Enden in der Querrichtung (Y-Y) über die Seiten (20b, 20c) hervorstehen und als entsprechende Reliefs (25), die in der Längsrichtung (X-X) ausgerichtet sind, ausgebildet sind;
• einen distalen vorderen Teil, der in der Art einer Nase (26) ausgebildet ist, die sich von der oberen Basis (20a) hin zu einer unteren vorderen Endkante verjüngt; eine entsprechende Führung (27) mit einer gekrümmten Verlängerung, die sich parallel zur oberen Oberfläche der Nase verjüngt, wobei die entsprechende Führung (27) an dem oberen Teil der Nase entlang jeder Seite ausgebildet ist;
• eine vordere Zunge (28), die sich in Längsrichtung zwischen den zwei Seiten (20b) erstreckt und deren proximales Ende innerhalb des Körpers (20) an diesem befestigt ist, während das entgegengesetzte distale Ende frei ist, wobei die Zunge (28) eine geeignete Elastizität aufweist, um ihre elastische Deformation entlang der vertikalen Richtung (Z-Z) zu ermöglichen; wobei das freie Ende der Zunge (28) einen Zahn (29) mit einer vertikalen Kante (29a) aufweist, die zur Innenseite des Körper (20) gerichtet ist;
• einen Raum (29c), der nach oben offen ist, in der Nase (26) ausgebildet ist und durch die Seiten (20a) des Körpers (20) und durch die Zunge (28) innen von den zwei Seiten begrenzt wird;
- eine Abdeckung (30), die das Folgende aufweist:
• eine Form und Ausmaße, die jene der Nase (26) des Körpers (20) komplementieren, vertikale Seiten (30a) mit einem freien Ende, das in der Art eines "C" in die Querrichtung (Y-Y) nach innen gefaltet ist, so dass Gleitelemente (31) ausgebildet werden, die geeignet sind, um auf den Führungen (27) der Nase (26) des Körpers (20) zu gleiten;
• einen vorderen Teil (32) mit einem ausgesparten Sitz (33), der von einer vertikalen Teilung (33a) begrenzt wird, geeignet, um mit dem Zahn (29) von der Zunge (28) in Eingriff zu stehen.

2. Verbindungselement nach Anspruch 1, **dadurch gekennzeichnet, dass** die parallelepipede Form des Körpers (20) in der vertikalen Richtung (Z-Z) eine Höhe aufweist, die viel geringer als die Länge in der Längsrichtung (X-X) ist.

3. Verbindungselement nach Anspruch 1 oder 2, **dadurch gekennzeichnet, dass** der Körper (20) zwei Paare von entsprechenden vorderen und hinteren, fixierten, inneren Auskleidungsseiten (21) aufweist, die in der Längsrichtung (X-X) parallel zu den Seiten (20b) des Körpers (20) benachbart angeordnet sind, von dem sie in der Querrichtung (Y-Y) um einen geeigneten Betrag in einem Abstand angeordnet sind und entsprechend in der zentralen Position mit einem Schlitz (22) verbunden sind, der in der vertikalen Richtung (Z-Z) an der gegenüberliegenden Seite zur Basis (20a) offen ist.

4. Verbindungselement nach einem der vorhergehenden Ansprüche, **dadurch gekennzeichnet, dass** die vorderen Oberflächen der Reliefs (25) einen ersten Abschnitt (25a), der sich im Wesentlichen vertikal erstreckt, und einen zweiten Abschnitt (25b) aufweisen, der an den ersten Abschnitt angrenzt und von der Basis (20a) in Richtung der entsprechenden freien Kante und von der Innenseite in Richtung der Außenseite in der Längsrichtung (X-X) geneigt ist.

5. Verbindungselement nach einem der vorhergehenden Ansprüche, **dadurch gekennzeichnet, dass** jede Seite (26a) der Nase (26) eine vertikale Anschlagfläche (26b) aufweist, die sich in der Querrichtung (Y-Y) in Richtung der Außenseite des Körpers (20) erstreckt.

6. Verbindungselement nach einem der vorhergehenden Ansprüche, **dadurch gekennzeichnet, dass** die äußere Oberfläche (29b) des Zahns (29) von oben in Richtung nach unten und von der Innenseite in Richtung der Außenseite des Körpers (20) geneigt ist.

## Revendications

1. Elément connecteur pour connecter les uns aux autres des balais d'essuie-glace de pare-brise et leur bras de mise en oeuvre (11, 11a ; 12, 12a), lesdits bras étant formés à la manière d'un U retourné orienté vers le pare-brise, avec leur extrémité libre (11a, 12a) de laquelle une languette formée (13) s'étend vers l'extérieur dans une direction longitudinale (X-X), comprenant :
- un corps (20) ayant
• une forme sensiblement parallélépipédique dotée d'une base supérieure (20a) et de côtés extérieurs verticaux (20b) ;
• un rebord arrière (24) s'étendant dans la direction transversale (Y-Y) et dont les extrémités opposées font saillie dans la direction transversale (Y-Y) au-delà des côtés (20b, 20c) et sont formées comme des reliefs respectifs (25) orientés dans la direction longitudinale (X-X) ;
• une partie avant distale formée à la manière d'un nez (26) biseauté depuis la base supérieure (20a) en direction d'un bord inférieur d'extrémité avant ; un guide respectif (27) de prolongement curviligne biseauté parallèle à la surface supérieure du nez étant formé sur la partie supérieure dudit nez le long de chaque côté ;
• une languette avant (28) s'étendant longitudinalement entre les deux côtés (20b) et dont l'extrémité proximale se trouvant à l'intérieur du corps (20) est fixée à ce dernier, tandis que son extrémité distale opposée est libre, la languette (28) ayant une élasticité appropriée pour en permettre la déformation élastique dans la direction verticale (Z-Z) ; l'extrémité libre de la languette (28) comportant une dent (29) dotée d'un bord vertical (29a) orienté vers l'intérieur du corps (20) ;
• un espace (29c), ouvert vers le haut, formé dans le nez (26) et délimité par les côtés (20a) du corps (20) et par la languette (28) à l'intérieur desdits deux côtés ;
un élément de recouvrement (30) ayant
• une forme et des dimensions complémentaires à celles du nez (26) du corps (20), comportant des côtés verticaux (30a) dotés d'une extrémité libre pliée à la manière d'un « C » vers l'intérieur dans la direction transversale (Y-Y), de façon à former des éléments coulissants (31) appropriés pour coulisser sur les guides (27) du nez (26) du corps (20) ;
• une partie avant (32) dotée d'un logement évidé (33) délimité par une séparation verticale (33a) appropriée pour une coopération avec ladite dent (29) de la languette (28).

2. Elément connecteur selon la revendication 1, **caractérisé en ce que** la forme parallélépipédique du corps (20) a une hauteur dans la direction verticale (Z-Z) bien inférieure à la longueur dans la direction longitudinale (X-X).

3. Elément connecteur selon la revendication 1 ou 2, **caractérisé en ce que** le corps (20) comporte deux paires de côtés fixes, respectivement avant et arrière, de garniture intérieure (21) disposés adjacents dans la direction longitudinale (X-X), parallèles aux côtés (20b) du corps (20) desquels ils sont espacés d'une distance appropriée dans une direction transversale (Y-Y) et connectés respectivement au niveau de la position centrale à une fente (22) ouverte dans la direction verticale (Z-Z) du côté opposé à la base (20a).

4. Elément connecteur selon l'une quelconque des revendications précédentes, **caractérisé en ce que** les surfaces avant desdits reliefs (25) comportent une première section (25a) s'étendant sensiblement verticalement et une seconde section (25b), adjacente à la première section, inclinée de la base (20a) en direction du bord libre respectif et de l'intérieur vers l'extérieur dans la direction longitudinale (X-X).

5. Elément connecteur selon l'une quelconque des revendications précédentes, **caractérisé en ce que** chaque côté (26a) du nez (26) comporte une surface de butée verticale (26b) s'étendant dans la direction transversale (Y-Y) en direction de l'extérieur du corps (20).

6. Elément connecteur selon l'une quelconque des revendications précédentes, **caractérisé en ce que** la surface extérieure (29b) de la dent (29) est inclinée du haut vers le bas et de l'intérieur vers l'extérieur du corps (20).
